# EUROPÄISCHE PATENTSCHRIFT

(11) **EP 1 647 640 B1**
(45) Veröffentlichungstag und Bekanntmachung des Hinweises auf die Patenterteilung: **11.06.2008**
(21) Anmeldenummer: 05022251.2
(22) Anmeldetag: 13.10.2005
(51) Int. Cl.: E03F 3/04, F16L 41/14, E21B 7/20

(54) **Kanalrohr, insbesondere Vortriebsrohr und Verfahren zu dessen Herstellung**
Sewer pipe, particularly driving pipe, and method of manufacturing the same
Tuyau de canalisation, notamment tuyau de fonçage, et son procédé de fabrication

(30) Priorität: 15.10.2004 DE 102004050520
(43) Veröffentlichungstag der Anmeldung: 19.04.2006
(73) Patentinhaber: DW Betonrohre GmbH, 41542 Dormagen (DE)
(72) Erfinder: Pastors, Holger, 41747 Viersen (DE)
(74) Vertreter: Patentanwälte Möll und Bitterich

(56) Entgegenhaltungen:
- EP-A- 0 603 775
- EP-A- 1 079 026
- FR-A- 2 806 430
- US-A- 4 174 126
- US-A- 5 060 986
- US-A- 5 181 746
- US-A- 5 890 837
- US-B1- 6 651 949

## Beschreibung

Die Erfindung betrifft ein Kanalrohr, insbesondere ein Vortriebsrohr mit einem Rohrkörper aus einer abbindefähigen Mischung aus vorwiegend mineralischen Zuschlagsstoffen und einem erhärtenden Bindemittel sowie ein Verfahren zu dessen Herstellung.

Kanalrohre, also Rohre für Kanalisationsleitungen, insbesondere für Abwasser, bestehen meist aus Stahlbeton oder Spannbeton. Stahlbeton ist in der Regel Zementbeton, bei dem eine aus einer Zementschlämpe bestehende Matrix das Bindemittel für die mineralischen Zuschlagstoffe wie Kies, Sand oder dergleichen darstellt. Zementbeton hat zwar die Eigenschaft, mit Bewehrungselementen aus Stahl einen festen Verbund einzugehen, ist als hydraulisches Bindemittel aber vor allem anfällig gegen Säuren; aus Zementbeton bestehende Rohre werden, sofern sie für den Transport von aggressiven Flüssigkeiten verwendet werden sollen, zumindest an der Seite, an der sie mit der Flüssigkeit in Berührung kommen, meist der Innenseite, mit einer Auskleidung aus einem chemikalienbeständigen Material, zum Beispiel einem sogenannten Inliner aus Kunststoff, versehen.

Neben Rohren aus Zementbeton sind vor allem für den Transport aggressiver Flüssigkeiten auch Rohre bekannt, deren Rohrkörper ganz oder in einzelnen Schichten aus Polymerbeton besteht. Polymerbeton ist eine dem Zementbeton vergleichbare Mischung, bei der als Bindemittel für die ebenfalls vorwiegend mineralischen Zuschlagstoffe Kunstharze verwendet werden, und zwar meist ungesättigte Polyesterharze, Polyurethanharze, Epoxydharze oder dergleichen.

Bei der Herstellung oder Sanierung von Kanalisationsleitungen wird oft in offener Baugrube gearbeitet. In jüngerer Zeit gewinnt insbesondere bei der Neuanlage von Kanalisationsleitungen die grabenlose Bauweise im unterirdischen Vortriebsverfahren immer mehr an Bedeutung, bei der Vortriebsrohre aus einem Startschacht heraus mittels hydraulischer Pressen in den Boden bis zu einem Zielschacht vorgetrieben werden.

In jedem Fall müssen an solche Kanalrohre, die als Sammler für Haus- oder Industrieabwässer dienen, die Zulaufleitungen, also zum Beispiel Haus- und Industrieanschlussleitungen, angeschlossen werden. Dies geschieht, wenn in offener Baugrube gearbeitet wird noch vor oder nach dem Verlegen des betreffenden Rohres, oder, wenn im Rohrvortrieb gearbeitet wurde, aus einem seitlichen Kopfloch heraus dadurch, dass in die Rohrwandung des betreffenden Kanalrohres eine meist kreisrunde Abzweigöffnung gebohrt wird, an der dann ein Anschlussrohr angebracht wird. Abgesehen davon, dass solche Arbeiten unter räumlichen Schwierigkeiten durchgeführt werden müssen, wird hierbei oft übersehen, dass durch Bohren einer solchen Abzweigöffnung die eingelegte Bewehrung zerschnitten wird, dass ferner in diesem Bereich die Rohrstatik gestört wird und dass sich im Lauf der Zeit an den zerschnittenen und der Betonüberdeckung beraubten Bewehrungsstäben Korrosion bildet und das Betongefüge zerstört wird.

Ein Kanalrohr der eingangs erwähnten Art ist beispielsweise aus der US 5,890,837 A bekannt.

Ein Verfahren zum dicht schließenden Verbinden eines solchen Anschlussrohres mit einem Kanalrohr ist beispielsweise aus EP 0 603 775 A1 bekannt. Hier wird in die im Rohrmantel des Kanalrohrs erzeugte Abzweigöffnung von außen her ein Anschlussrohr eingesetzt, das an seinem inneren, dem Kanalrohr zugewandten Ende eine seitlich gegen die Rohrwandung offene Dichtungskammer aufweist, in die eine Ringdichtung eingelegt werden kann. Wenn das über die Rohrwandung des Kanalsrohrs hinausragende Anschlussrohr von der Außenseite her mittels eines auf ein Außengewinde des Anschlussrohrs aufgeschraubten Gewinderings nach außen bewegt wird, verspannt sich die Ringdichtung gegen die Innenfläche der Rohrwandung und dichtet hierdurch die Öffnung ab; ein etwa verbliebener Hohlraum wird mit PU-Schaum ausgespritzt.

Die Anbringung eines solchen Anschlussrohres ist davon abhängig, dass die dazu erforderlichen Arbeiten vor Ort bei Verlegung in offener Baugrube meist vor dem Verlegen ausgeführt werden können. Dies ist bei Kanalisationsleitungen, die im unterirdischen Vortriebsverfahren hergestellt werden, nur sehr eingeschränkt, nämlich nur aus einem zu diesem Zweck erzeugten seitlichen Kopfloch heraus möglich.

Vor diesem Hintergrund liegt der Erfindung die Aufgabe zugrunde, eine Möglichkeit zu finden, um die Herstellung von Hausanschlüssen insbesondere bei im Vortrieb hergestellten Kanalisationsleitungen zu erleichtern.

Erfindungsgemäß wird diese Aufgabe durch ein Kanalrohr mit den im Anspruch 1 angegebenen Merkmalen gelöst.

Vorteilhafte Weiterbildungen sind in den abhängigen Ansprüchen angegeben.

Gegenstand der Ansprüche 16 und 18 sind Verfahren zum Herstellen eines solchen Kanalrohrs.

Wesentliches Merkmal der Erfindung ist, dass die Öffnungen für den späteren Anschluss von seitlichen Zulaufleitungen schon im Zuge der Herstellung des Kanalrohrs erzeugt, für den Zeitraum des Einbaus, insbesondere des Vortriebs der Rohrleitung, aber auch, wenn sie nicht benötigt werden, für den Endzustand verschlossen werden, und zwar so, dass sie im Bedarfsfall von der Außenseite des Kanals her, also zum Beispiel aus einem Kopfloch heraus geöffnet werden können, um die Anschlussteile einzubauen, an die dann die Zulaufleitung angeschlossen werden kann. Dabei reicht es in der Regel aus, wenn die Öffnungen in bestimmten Abständen voneinander im Kämpferbereich oder oberhalb desselben vorgesehen werden.

Allerdings müssen die Öffnungen für den Zeitraum des Verlegens, insbesondere des Vortriebs des Rohres, so verschlossen werden, dass einerseits der Vortrieb nicht behindert wird und dass andererseits aber auch während des Vortriebs und der späteren Abwasserableitung durch den Kanal die Dichtigkeit des Kanals nicht beeinträchtigt wird. Dies kann nach außen durch jeweils eine außenbündig anzubringende Abdeckplatte vornehmlich aus Stahl geschehen, nach innen im einfachsten Fall dadurch, dass zum Beispiel bei einem mit einer Innenauskleidung aus einem Inliner versehenen Rohr diese über die Aussparung durchgeht und erst dann ausgeschnitten wird, wenn eine Zulaufleitung anzuschließen ist.

Es ist auch möglich, alle zur Erfüllung der wesentlichen Funktionen eines späteren Anschlusses erforderlichen Teile, also einerseits für die ordnungsgemäß gedichtete Anbringung des Anschlussrohres an dem Kanalrohr, aber auch für das nachträgliche Verbinden mit dem Zulaufrohr, bereits von vornherein im Bereich der Wanddicke des Kanalrohres unterzubringen. Natürlich ist es in diesem Fall besonders wichtig, diese Teile so abzudecken bzw. zu schützen, dass beim Vortrieb die wesentlichen Bereiche des Anschlussrohres nicht beschädigt oder beschmutzt werden. Dabei kann - zusätzlich zu der äußeren Abdeckung - das im Inneren der Aussparung gegen die Rohrwandung verspannte Anschlussrohr sowohl nach außen als auch nach innen durch Verschlussstopfen abgedichtet werden, nach deren Entfernen an Ort und Stelle das Kunststoffrohr der Hausanschlussleitung angebracht werden kann.

Um die Öffnungen für den nachträglichen Anschluss seitlicher Zulaufleitungen zu erzeugen, wird in der Rohrwandung des Kanalrohrs schon bei der Herstellung durch einen entsprechenden Schalungskörper eine Aussparung erzeugt, die nach dem Abbinden bzw. Erhärten des Betons geöffnet werden kann. Dabei kann nicht nur Rücksicht auf die Bewehrungsführung genommen, sondern es können an den entsprechenden Stellen auch Zusatzbewehrungen mit der notwendigen Betonüberdeckung eingelegt werden, so dass der gesamte Einlaufbereich korrosionsgeschützt ist.

Die Erfindung hat den großen Vorteil, dass der Kanal zum Ansetzen einer Zulaufleitung, zum Beispiel eines Hausanschlusses, nicht betreten zu werden braucht, was insbesondere durch die Sicherheitsbestimmungen der Berufsgenossenschaften mit erheblichen Aufwendungen, nicht nur hinsichtlich der Kosten, verbunden ist.

Die Erfindung wird nachstehend anhand der in der Zeichnung dargestellten Ausführungsbeispiele näher erläutert. Es zeigt
- Fig. 1: einen Querschnitt durch die Rohrwandung eines Vortriebsrohres aus Beton mit eingebautem Anschlussrohr in für den Vortrieb vorbereiteter Ausführung,
- Fig. 2: das Detail A in Fig. 1 in größerem Maßstab,
- Fig. 3: in einem entsprechenden Querschnitt wie Fig. 1 den geöffneten Rohranschluss, vorbereitet zum Anbringen einer Zulaufleitung,
- Fig. 4: eine weitere Ausführungsform der Erfindung,
- Fig. 5: das Detail B in Fig. 5 in größerem Maßstab,
- Fig. 6: eine für geringere Wanddicken geeignete Ausführungsform der Erfindung in einem der Fig. 1 entsprechenden Querschnitt sowie die
- Fig. 7 und 8: weitere Ausführungsformen der Erfindung.

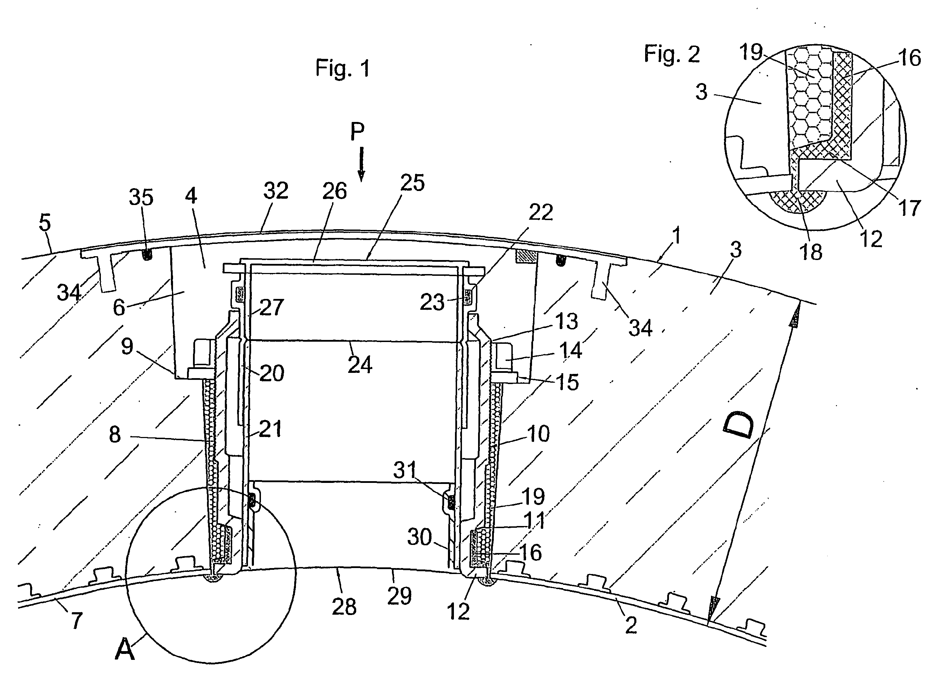

Fig. 1 zeigt einen Querschnitt durch ein Kanalrohr 1, insbesondere ein Stahlbetonrohr, das zum Schutz des Zementbetons an der Innenseite mit einer Innenauskleidung 2 zum Beispiel aus PVC hart versehen ist. In der Rohrwandung 3 ist eine Aussparung 4 als Abzweigöffnung vorgesehen. Die Aussparung 4 wird sinnvollerweise dadurch erzeugt, dass in die Schalungsform zur Herstellung des Stahlbetonrohres 1 ein entsprechender Formkörper eingelegt wird, der nach dem Abbinden und Erhärten des Beton entfernt wird.

Die Aussparung 4 hat zum späteren Einsetzen einer seitlichen Zulaufleitung kreisförmigen Querschnitt und ist von innen nach außen etwas konisch erweitert; zusätzlich hat der der Außenfläche 5 des Betonrohrs 1 zugewandte äußere Bereich 6 der Aussparung 4 einen etwas größeren Durchmesser als der der Innenfläche 7 zugewandte innere Bereich 8. Am Übergang vom inneren Bereich 8 zum äußeren Bereich 6 ist eine Ringschulter 9 gebildet.

In der Darstellung der Fig. 1 ist in die Aussparung 4 bereits ein rohrförmiges Anschlusselement 10 aus Kunststoff eingesetzt, das die wesentlichen, mit dem Rohrkörper 1 zu verbindenden Elemente enthält. Das Anschlusselement 10 hat im wesentlichen zylindrische Form; es besitzt an seinem unteren, der Innenfläche 7 des Betonrohrs 1 zugekehrten Ende eine zu seiner Außenseite hin geöffnete Dichtungskammer 11, die am unteren Ende durch einen ebenfalls nach außen gerichteten Flansch 12 begrenzt wird. In seinem mittleren Bereich trägt das Anschlusselement 10 ein Außengewinde 13, auf das ein mit einem entsprechenden Innengewinde versehener Spannring 14 aufgeschraubt werden kann, der sich über einen Distanzring 15 gegen die Ringschulter 9 abstützt. An seinem oberen Ende ist das Anschlusselement 10 durch eine Abkröpfung nach innen wieder auf den durch die Dichtungskammer 11 bestimmten Innendurchmesser zurückgeführt.

Das Anschlusselement 10 muss gegen den Rohrkörper 1 einwandfrei und dauerhaft gedichtet sein. Hinzu kommt, dass das Anschlusselement 10, zumindest bei nicht begehbaren Rohrquerschnitten so ausgebildet sein muss, dass es von außen eingesetzt werden kann. Eine Lösung hierzu kann anhand Fig. 2 erläutert werden, die das Detail A aus Fig. 1 in größerem Maßstab zeigt.

Bereits vor dem Einsetzen des Anschlusselements 10 in die Aussparung 4 wird in die Dichtungskammer 11 eine Ringdichtung 16 eingelegt, die am Ende eines Steges 17 eine pilzkopfartige Verdickung 18 besitzt. Beim Einsetzen des Anschlusselements 10 in Richtung des Pfeils P in Fig. 1 in die Aussparung 4 kann sich der Flansch 17 mit der Verdickung 18 in die Dichtungskammer 11 zurückschlagen, kehrt dann aber nach Durchdringen der Aussparung 4 in die in Fig. 1, insbesondere in Fig. 2 gezeigte Form zurück. Beim Verspannen des Anschlusselementes 10 mittels des Spannrings 14 gegen die Ringschulter 9 dichtet die pilzkopfartige Verdickung 18 die Fuge zwischen dem Anschlusselement 10 und der Innenauskleidung 2 bzw. der Rohrwandung 3, und zwar einerseits durch Anlage an dem Flansch 12 des Anschlusselements 10 und andererseits durch Anlage an der Innenauskleidung 2 des Betonrohres 1. Der zwischen Anschlusselement 10 und Wand der Aussparung 4 verbliebene Hohlraum kann durch PU-Schaum 19 ausgefüllt werden.

In das Anschlusselement 10 ist zur Vorbereitung des späteren Einsetzens der Zulaufleitung ebenfalls von außen her eine Kombination aus einem Muffenrohr 20 und einem Innenrohr 21 eingesetzt. Das Muffenrohr 20 besitzt am oberen Ende eine Dichtungskammer 22, in die ein O-Ring 23 aus Gummi oder Kunststoff als Dichtung eingelegt ist und ist in seinem weiteren Verlauf mit einem nach innen ragenden Ringwulst 24 versehen, der eine Einschubbegrenzung bildet. Gegen diesen Ringwulst 24 stößt von unten das Innenrohr 21, das mit dem Muffenrohr 20 entweder durch Klemmung oder durch Klebung, Verschweißung oder dergleichen verbunden sein kann.

Während diese Teile für das spätere Anbringen einer Zulaufleitung Bedeutung haben, zeigt Fig. 1 noch, wie das Anschlusselement 10 sowohl zur Außenseite als auch zur Innenseite des Kanalrohrs 1 bis zu diesem Zeitpunkt abgeschlossen ist. Dieser temporäre Abschluss wird zur Außenseite hin durch einen topfartigen Verschlussstopfen 25 erreicht, der einen Deckel 26 besitzt und mit einem zylindrischen Ansatz 27 von außen in das Muffenrohr 20 eingeschoben wird, bis er einen Anschlag an dem Ringwulst 24 findet. Der Verschlussstopfen 25 ist gegen das Muffenrohr 20 durch den O-Ring 23 gedichtet. Zur Innenseite des Betonrohres 1 hin ist in das Innenrohr 21 ein ähnlicher Verschlussstopfen 28 eingesetzt, der ebenfalls einen Deckel 29 und einen zylindrischen Ansatz 30 besitzt, der über einen O-Ring 31 gegenüber dem Innenrohr 21 gedichtet ist.

Während diese Anschlussteile in ihrer Längenentwicklung so gestaltet sind, dass sie innerhalb der Dicke D der Rohrwandung untergebracht werden können, ist die gesamte Aussparung 4 mit dem Anschlusselement 10 und den weiteren Einbauteilen zur Außenseite des Betonrohrs 1 hin durch eine kreisförmige Abdeckplatte 32 zweckmäßig aus V2A-Stahl abgeschlossen. Die Abdeckplatte 32 ist in eine Vertiefung 33 in der Außenfläche 5 des Betonrohrs 1 eingelassen, so dass ihre Außenfläche außenbündig mit der Außenfläche 5 des Betonrohrs 1 verläuft. Die Abdeckplatte 32 ist durch Schrauben 34 von außen befestigt; einer Dichtung gegenüber der Außenfläche des Betonrohrs 1 dient eine Rundschnur 35.

Derart vorbereitet kann das Betonrohr 1 als Vortriebsrohr eingesetzt und im unterirdischen Vortrieb vorgepresst werden. Es ist vorgesehen, an dem Betonrohr 1 derart vorbereitete Anschlussstellen zu mehreren in bestimmten Abständen voneinander, auch einander gegenüberliegend vorzusehen, um den dann für eine Zulaufleitung, zum Beispiel einen Hausanschluss, geeignet liegenden Anschluss an Ort und Stelle zu öffnen und das Anschlusselement von außen her einsetzen zu können. Dies kann bei einem in grabenloser Bauweise vorgetriebenen Kanal aus einem seitlich des Kanals abgeteuften Kopfloch heraus erfolgen.

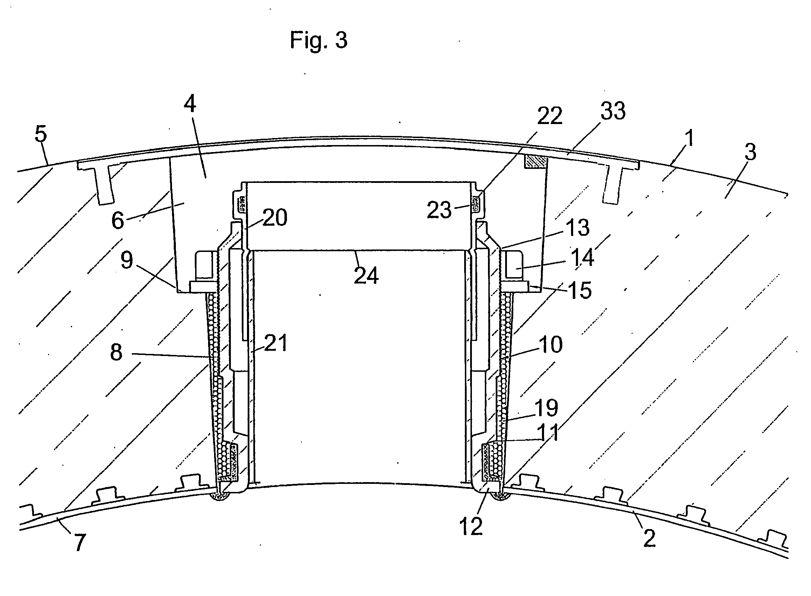

In dieser Form kann der Kanal benutzt werden, bis entweder im Anschluss an den Verlegevorgang oder auch später zu einem beliebigen Zeitpunkt die Aussparung zum Einrichten eines Hausanschlusses geöffnet wird. Zur Öffnung des vorbereiteten Anschlusses braucht von außen zunächst nur die Abdeckplatte 32 durch Abschrauben entfernt und danach der äußere Muffenstopfen 25 herausgenommen zu werden. Durch die so entstandene Öffnung innerhalb des Anschlusselements 10 kann der in das gegenüberliegende Ende eingesetzte innere Verschlussstopfen 28 nach innen herausgestoßen werden. Die Abzweigöffnung ist damit frei zum Einbringen eines Hausanschlussrohres gemäß bekannter Technik. Diesen Zustand zeigt Fig. 3. Dabei dient der in die Dichtungskammer 22 eingesetzte O-Ring 23 als Dichtung zwischen dem Muffenrohr 20 und dem - nicht dargestellten - einzusetzenden Hausanschlussrohr, das wiederum bis zu dem Ringwulst 24 eingeschoben wird.

Sowohl beim Vortrieb, nämlich beim Vorpressen unter Verwendung von Bentonitschlempe als Gleitmittel, die mit hohem Druck zwischen Vortriebsrohr und Gebirge eingepresst wird, als auch im eingebauten Zustand im Grundwasser kann die Gefahr bestehen, dass Flüssigkeit von außen her in die Fuge zwischen dem Anschlusselement und der Wand der Aussparung eindringt. Diese Flüssigkeit kann bis zur Innenauskleidung des Betonrohres vordringen und diese beschädigen. Gerade bei Vortriebsarbeiten kann die Konstruktion für die Bentonitsuspension wie ein Filter wirken, das die Trägersubstanz, nämlich Wasser, hindurchtreten lässt.

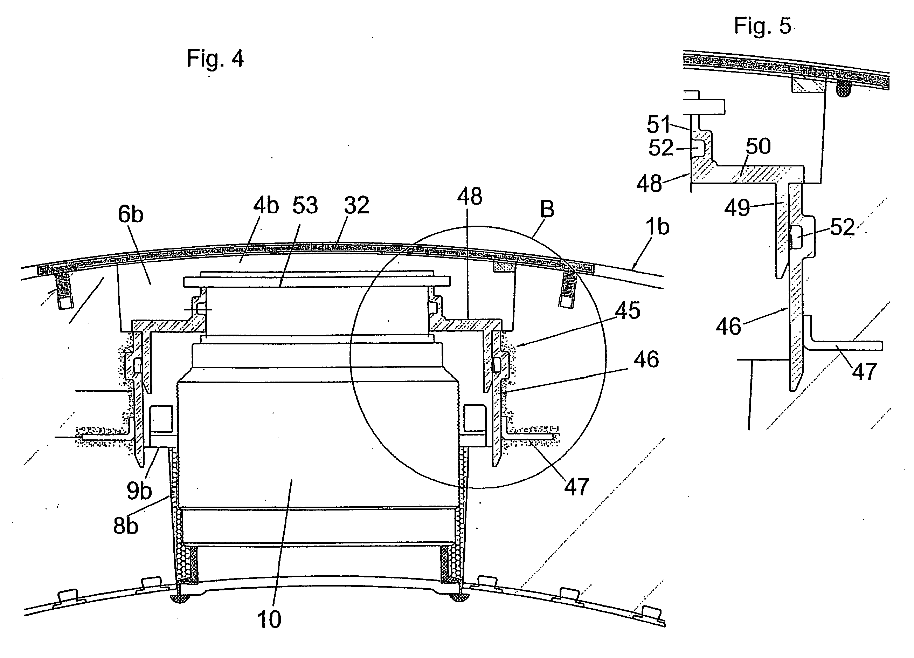

Eine Ausführungsform, durch die diese Gefahr der Um- oder Hinterläufigkeit der Konstruktion vermieden wird, ist in Fig. 4 in einem der Fig. 1 entsprechenden Schnitt dargestellt. Während das Kanalrohr 1 b mit der Aussparung 4b, ihrem oberen weiteren Bereich 6b, dem unteren engeren Bereich 8b und der dazwischen gebildeten Ringschulter 9b sowie mit dem, hier in Ansicht gezeichneten Anschlusselement 10 im wesentlichen der Ausführungsform gemäß Fig. 1 entspricht, ist hier in die Wand der Aussparung 4b in ihrem oberen Bereich 6b eine insgesamt mit 45 bezeichnete Umläufigkeitsdichtung eingesetzt. Diese Umläufigkeitsdichtung 45, die anhand Fig. 5, dem vergrößerten Detail B aus Fig. 4, erläutert werden kann, besteht aus einem rohrförmigen Sperrteil 46, an das ein mit einem Flansch in den Betonkörper des Rohres 1 b hineinragender Winkelring 47 angesetzt ist und einem Übergangsteil 48, das den - größeren - Durchmesser des Sperrteils 46 auf den - geringeren - Durchmesser des einzusetzenden Hausanschlussrohres (nicht dargestellt) zurückführt. Demgemäß besteht das Übergangsteil 48 aus einem unteren zylindrischen Ansatz 49, mit dem es von außen her in das Sperrteil 46 eingesetzt ist, einem flanschartig nach innen ragenden Ringteil 50 und einem oberen zylindrischen Ansatz 51. Sowohl in der Fuge zwischen dem unteren zylindrischen Ansatz 49 des Übergangsteils 48 und dem Sperrteil 46 als auch in der zwischen dem oberen zylindrischen Ansatz 51 und dem später einzusetzenden Hausanschlussrohr sind Dichtungen 52 in Form von O-Ringen vorgesehen.

Die Öffnung des Übergangsteils 48 nach außen hin wird, ähnlich wie im Zusammenhang mit Fig. 1 beschrieben, bis zur Einrichtung eines Hausanschlusses durch einen Verschlussstopfen 53 verschlossen.

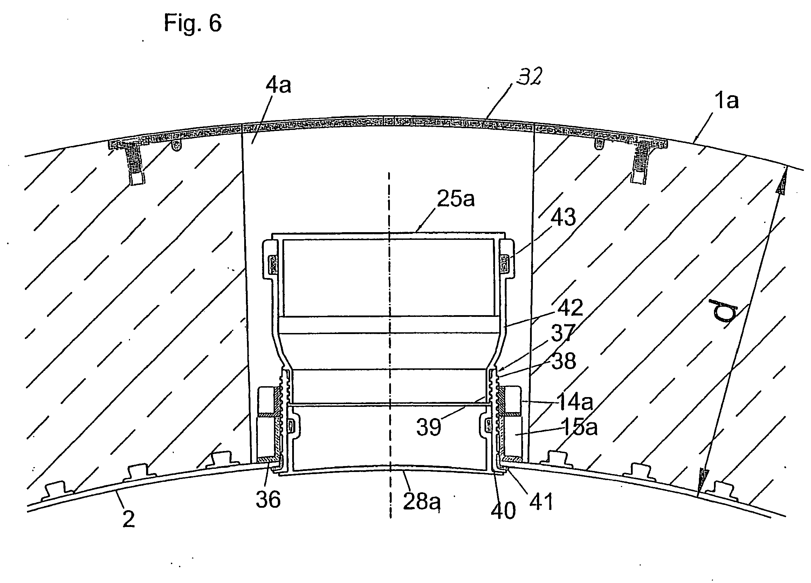

In Fig. 6 ist, ähnlich wie in Fig. 1, in einem teilweisen Querschnitt durch ein Kanalrohr 1 a aus Stahlbeton eine für geringere Wanddicken einsetzbare Ausführungsform eines vorbereiteten Anschlusses dargestellt. Hier reicht die Aussparung 4a mit etwa gleichem, allenfalls sich etwas verringerndem Querschnitt bis zur Innenauskleidung 2 des Betonrohres 1, die über einen geringen Bereich 36 in die Aussparung 4a hinein vorkragt.

In die Aussparung 4a ist wiederum ein rohrförmiges, allerdings sehr niedriges Anschlusselement 37 eingesetzt, das in seinem oberen Bereich sowohl ein Außengewinde 38 als auch ein Innengewinde 39 aufweist. An seinem unteren Ende besitzt das Anschlusselement 37 einen nach außen weisenden Flansch 40; in dem hierdurch gebildeten Außenwinkel liegt ein ebenfalls winkelförmiger Dichtungsring 41 aus elastischem Material. Das Anschlusselement 37 kann bei dieser Ausführung von der Innenseite des Betonrohres 1a her eingesetzt und durch den von außen auf das Außengewinde 38 aufgeschraubten Spannring 14a und den untergelegten Distanzring 15a gegen den Überstand 36 der Innenauskleidung 2 verspannt werden.

Von der Rohraußenseite her ist in das Anschlusselement 37 ein Muffenrohr 42 eingeschraubt, das sich nach oben hin etwas erweitert und an seinem oberen Ende in einer nach innen geöffneten Dichtungskammer einen O-Ring 43 aufnimmt. Zur Sicherung der so gebildeten Öffnung während der Montage bzw. während des Vortriebs ist in das Muffenrohr 42 von außen her ein Verschlussstopfen 25a eingesetzt und von der Innenseite her ein Verschlussstopfen 28a, ähnlich wie bei der Ausführungsform nach Fig. 1; eine Abdeckplatte 32 in der Außenfläche des Betonrohres 1a ist ebenfalls vorgesehen.

Zur Herstellung des Rohranschlusses werden am verlegten Rohr nach Entfernen der Abdeckplatte 32 der Verschlussstopfen 25a abgenommen und der Verschlussstopfen 28a nach innen herausgestoßen, wodurch die Öffnung frei wird. In das Muffenrohr 42 kann dann das Anschlusselement eingesetzt werden, das, wie vorstehend beschrieben, gegen die Dichtung 43 dichtet.

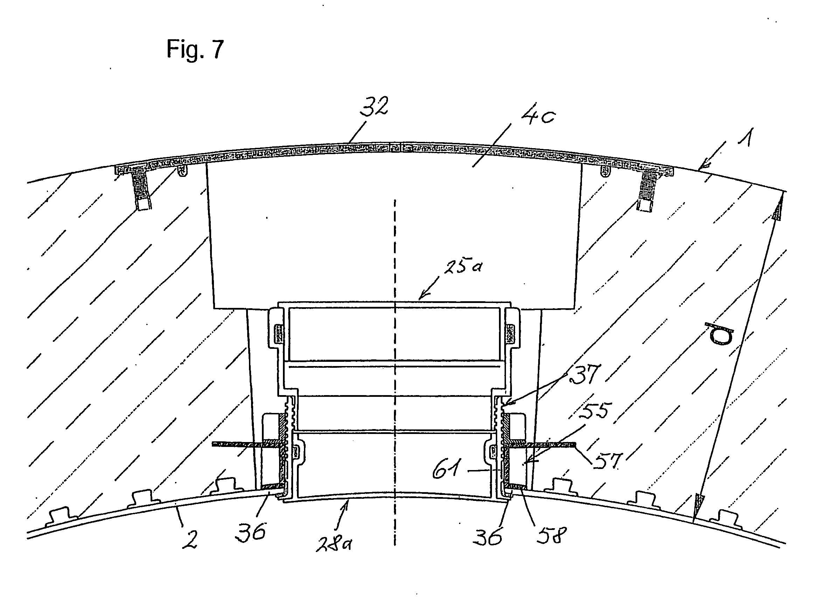

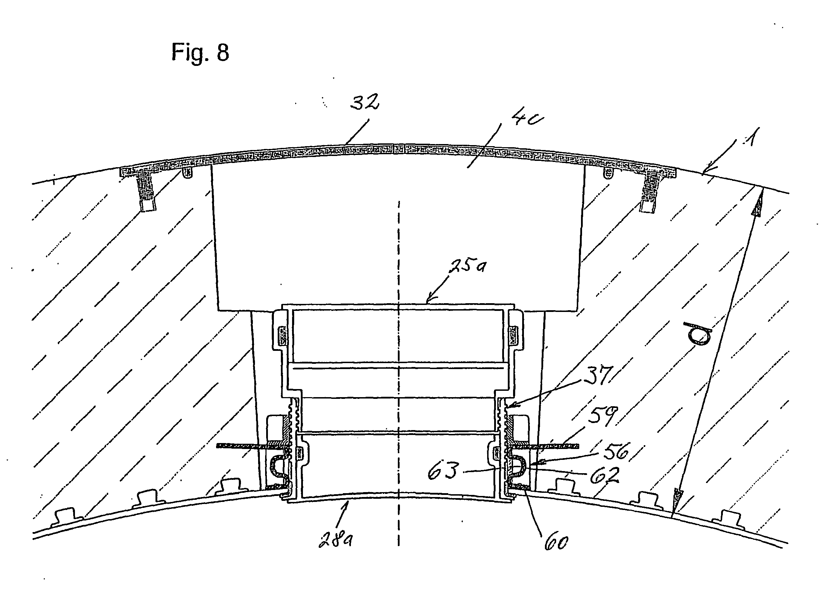

In den Fig. 7 und 8 ist noch angedeutet, wie auch bei dieser Lösung für geringere Rohrwanddicken eine Umläufigkeitsdichtung realisiert werden kann.

Während die Ausgestaltung der Aussparung 4c und diejenige der bereits eingebauten Anschlussteile 37, 25a und 28a im wesentlichen dem in Fig. 6 gezeigten Ausführungsbeispiel entspricht, ist bei der in den Fig. 7 und 8 dargestellten Ausführungsform in den Rohrkörper 1 jeweils eine Umläufigkeitsdichtung einbetoniert, die mit 55 (Fig. 7) bzw. 56 (Fig. 8) bezeichnet ist. Die Umläufigkeitsdichtung 55 bzw. 56 ist jeweils als Ring mit U-förmigem Querschnitt und mit ungleich langen, nach außen gerichteten Schenkeln 57, 58 bzw. 59, 60 ausgeführt. Die Umläufigkeitsdichtung 55, 56 ist dabei so in den Rohrkörper 1 eingesetzt, dass der jeweils kürzere Schenkel 58 bzw. 60 an dem Überstand 36 der Innenauskleidung 2 anliegt, während der jeweils längere Schenkel 57 bzw. 59 in den Beton des Rohrkörpers 1 hineinreicht. Die Umläufigkeitsdichtung 55 bzw. 56 erfüllt damit zugleich die Aufgabe des Distanzrings 15a gemäß der Ausführungsform nach Fig. 6, gegen den der Spannring 14a verspannt ist.

Während der jeweils längere Schenkel 57 bzw. 59 der Umläufigkeitsdichtung 55 bzw. 56 in den Rohrkörper 1 eingebettet ist und eine Dichtung gegen etwa von außen in die Fuge zwischen dem Betonkörper und den Anschlussteilen eindringendes Wasser bildet, kann das Profil der Umläufigkeitsdichtung 55 bzw. 56 auch noch nach innen gegen das Anschlusselement 37 gedichtet werden. Dies ist in Fig. 8 angedeutet, in der der Steg 62 des U-Profils 55 bzw. 57 nicht wie bei Fig. 7 gerade geführt ist (61), sondern eine Art Ringnut (63) bildet, in die ein Dichtungsring eingelegt werden kann.

## Patentansprüche

1. Kanalrohr (1), insbesondere Vortriebsrohr für den Vortrieb in grabenloser Bauweise, mit einem Rohrkörper (1) aus einer abbindefähigen Mischung aus vorwiegend mineralischen Zuschlagsstoffen und einem erhärtenden Bindemittel, (1)
wobei an einen aus solchen Rohren (1) erstellten Kanal nachträglich seitlich Zulaufleitungen anzuschließen sind, wobei
- in dem Rohrkörper (1, 1a, 1b) an vorgegebenen Stellen die Rohrwandung (3) durchgreifende Aussparungen (4, 4a, 4b) mit vorzugsweise kreisförmigem Querschnitt vorgesehen sind,
- die Aussparungen (4, 4a, 4b) sowohl zur Außen- (5) als auch zur Innenseite (7) des Rohres (1) hin durch Verschlussmittel (26,28,32) Verschlossen sind, und zwar so,
- dass sie im Falle des Anschlusses einer Zulaufleitung an ein im Erdreich verlegtes Rohr eines Kanals von der Außenseite (5) her geöffnet werden können,
**dadurch gekennzeichnet, dass** die Aussparungen (4, 4a, 4b) über die Dicke (D) der Rohrwandung (3) einen zur Aufnahme von Anschlussteilen geeigneten Hohlraum bilden und dass die Verschlussmittel (32) der Außenfläche (5) des Rohres (1) angepasst sind.

2. Kanalrohr nach Anspruch 1, **dadurch gekennzeichnet, dass** in die Aussparungen (4, 4a, 4b) die für den nachträglichen Anschluss von Zulaufleitungen erforderlichen Anschlussteile (10) bereits vor Anbringung der Verschlussmittel eingesetzt sind.

3. Kanalrohr nach Anspruch 1 oder 2, **dadurch gekennzeichnet, dass** die Anschlussteile (10) in die Rohrwandung (3) eingreifende, eine Umläufigkeitsdichtung (45) bildende Elemente umfassen.

4. Kanalrohr nach einem der Ansprüche 1 bis 3, **dadurch gekennzeichnet, dass** als Verschlussmittel zur Außenseite (5) des Rohres hin vornehmlich aus Stahl bestehende Abdeckplatten (32) vorgesehen sind.

5. Kanalrohr nach Anspruch 4, **dadurch gekennzeichnet, dass** die Abdeckplatten (32) der Krümmung der Außenfläche (5) des Rohres (1) angepasst sind und flächenbündig mit dieser verlaufen.

6. Kanalrohr nach Anspruch 4 oder 5, **dadurch gekennzeichnet, dass** die Abdeckplatten (32) im Umriss größer sind als der Querschnitt der Aussparungen (4, 4a, 4b) und jeweils in eine die Aussparung umlaufende Vertiefung in der Außenfläche (5) des Rohrkörpers (1) eingelegt sind.

7. Kanalrohr nach Anspruch 6, **dadurch gekennzeichnet, dass** die Abdeckplatten (32) in den den Querschnitt der Aussparungen übersteigenden Randbereichen am Rohrkörper (1) lösbar, zum Beispiel durch Schrauben (34) befestigt sind.

8. Kanalrohr nach einem der Ansprüche 4 bis 7, **dadurch gekennzeichnet, dass** die Fugen zwischen den Abdeckplatte (32) und dem Rohrkörper durch jeweils mindestens eine umlaufende Dichtung (35) gedichtet sind.

9. Kanalrohr nach einem der Ansprüche 1 bis 8, **dadurch gekennzeichnet, dass** in der Wand der Aussparungen (4, 4a, 4b) jeweils eine durch Querschnittsveränderung bewirkte Ringschulter (9, 9a, 9b) vorgesehen ist, gegen welche die Anschlussteile (10) dichtend verspannbar sind.

10. Kanalrohr nach einem der Ansprüche 3 bis 9, **dadurch gekennzeichnet, dass** als Umläufigkeitsdichtung (45) in die Aussparung (4, 4a) ein rohrförmiges Sperrteil (46) eingesetzt ist, das mit einem dieses ringförmig umgebenden und in die Rohrwandung eingebundenen Winkelring (47) fest verbunden ist.

11. Kanalrohr nach Anspruch 10, **dadurch gekennzeichnet, dass** in das Sperrteil (46) zur Durchmesserrückführung ein Übergangsteil (48) eingesetzt ist.

12. Kanalrohr nach Anspruch 11, **dadurch gekennzeichnet, dass** das Übergangsteil (48) aus einem in das Sperrteil (46) einsetzbaren unteren zylindrischen Ansatz (49) besteht, der über ein flanschartig nach innen ragendes Ringteil (50) in einen das Rohr eines Hausanschlusses aufnehmenden oberen zylindrischen Ansatz (51) übergeht.

13. Kanalrohr nach Anspruch einem der Ansprüche 10 bis 12, **dadurch gekennzeichnet, dass** sowohl das Sperrteil (46) als auch das Übergangsteil (48) aus Kunststoff, zum Beispiel PVC, besteht.

14. Kanalrohr nach einem der Ansprüche 3 bis 8, **dadurch gekennzeichnet, dass** als Umläufigkeitsdichtung in die Aussparung (4c) ein im Querschnitt U-förmiges Ringteil (55, 56) eingesetzt ist, das mit mindestens einem Schenkel (57, 59) in den Rohrkörper (1) eingebettet ist und dessen zur Aussparung (4c) gerichteter Steg (61, 62) eine Führung für ein Anschlusselement (37) bildet.

15. Kanalrohr nach Anspruch 14, **dadurch gekennzeichnet, dass** der Steg (62) eine zur Aussparung (4c) hin gerichtete Ringnut (63) zur Aufnahme eines Dichtungsringes bildet.

16. Verfahren zum Herstellen eines Kanalrohres nach einem der Ansprüche 1 bis 15, **gekennzeichnet durch** folgende Verfahrensschritte:
- bei der Herstellung des Kanalrohrs (1) in einer Schalungsform werden in der Rohrwandung (3) **durch** Einlegen von Formkörpern in die Schalungsform die Rohrwandung (3) durchgreifende Aussparungen (4, 4a, 4b) erzeugt, die zur Aufnahme von Anschlussteilen geeignete Hohlräume bilden.
- nach dem Ausschalen des erhärteten Rohres werden die Aussparungen (4, 4a, 4b, 4c) sowohl zur Außen (5)- als auch zur Innenseite (7) des Rohres hin durch Verschlussmittel (26,28,32) flächenbündig verschlossen, und zwar so,
- dass sie im Falle des späteren Anschlusses einer Zulaufleitung an ein im Erdreich verlegtes Rohr eines Kanals von der Außenseite her zum Einbau der für den Anschluss erforderlichen Teile geöffnet werden können.

17. Verfahren nach Anspruch 16, **dadurch gekennzeichnet, dass** nach dem Ausschalen des erhärteten Rohres in die Aussparungen die für den nachträglichen Anschluss von Zulaufleitungen erforderlichen Anschlussteile (10) eingebaut und nach dem Einbau der Anschlussteile die Aussparungen (4) sowohl zur Außen- (5) als auch zur Innenseite (7) des Rohres hin durch Verschlussmittel (26,28,32) flächenbündig verschlossen werden.

18. Verfahren zum Herstellen eines Kanalrohres nach einem der Ansprüche 1 bis 15, mit einer durchgehenden Innenauskleidung (2) aus einem chemikalienbeständigen Material, insbesondere einem Inliner aus Kunststoff, **gekennzeichnet durch** folgende Verfahrensschritte:
- bei der Herstellung des Kanalrohres in einer Schalungsform werden bei durchgehendem Inliner in der Rohrwandung diese durchgreifende Aussparungen (4) erzeugt,
- nach dem Ausschalen des erhärteten Rohres werden die Aussparungen (4) zur Außenseite (5) des Rohres hin **durch** Verschlussmittel (32) flächenbündig verschlossen, und zwar so,
- dass sie im Falle des späteren Anschlusses einer Zulaufleitung an ein im Erdreich verlegtes Rohr eines Kanals von der Außenseite (5) her zum Einbau der für den Anschluss erforderlichen Teile geöffnet werden können.

19. Verfahren nach Anspruch 18, **dadurch gekennzeichnet, dass** zum Öffnen der Aussparung nach dem Entfernen der Verschlussmittel von außen der die Aussparung (4) nach innen abschließende Inliner (R) durchbohrt wird.

## Claims

1. A duct pipe (1), in particular a driving pipe for driving using the trenchless construction method, with a pipe body (1) composed of a settable mixture of predominantly mineral aggregates and of a binding agent which hardens,
wherein inlet lines are to be connected to the duct created from such pipes (1), wherein
- recesses (4,4a,4b) passing through the pipe wall (3) and of preferably circular cross-section are provided in the pipe body (1,1a,1b) at predetermined locations,
- the recesses (4,4a,4b) are closed both with respect to the outside (5) and with respect to the inside (7) of the pipe (1) by closure means (26,28,32), and in such a way
- that they can be opened from the outside (5) in the event of the connection of an inlet line to a pipe of a duct installed in the ground,
**characterised in that** the recesses (4,4a,4b) form over the thickness (D) of the pipe wall (3) a hollow space suitable for receiving connecting members, and **in that** the closure means (32) are adapted to the outer surface (5) of the pipe (1).

2. A duct pipe according to Claim 1, **characterised in that** the connecting members (10), which are required for the subsequent connection of inlet lines, are already inserted in the recesses (4,4a,4b) prior to the mounting of the closure means.

3. A duct pipe according to Claim 1 or 2, **characterised in that** the connecting members (10) comprise elements engaging in the pipe wall (3) and forming a seepage seal (45).

4. A duct pipe according to any one of Claims 1 to 3, **characterised in that** cover plates (32) consisting principally of steel are provided as closure means with respect to the outside (5) of the pipe.

5. A duct pipe according to Claim 4, **characterised in that** the cover plates (32) are adapted to the curvature of the outer surface (5) of the pipe (1) and extend flush therewith.

6. A duct pipe according to Claim 4 or 5, **characterised in that** the cover plates (32) are larger in outline than the cross-section of the recesses (4,4a,4b) and in each case are inserted into an indentation surrounding the recess, in the outer surface (5) of the pipe body (1).

7. A duct pipe according to Claim 6, **characterised in that** the cover plates (32) are fastened releasably, for example by screws (34), to the pipe body (1) in the edge zones projecting beyond the cross-section of the recesses.

8. A duct pipe according to any one of Claims 4 to 7, **characterised in that** the joints between the cover plates (32) and the pipe body are sealed in each case by at least one circumferential seal (35).

9. A duct pipe according to any one of Claims 1 to 8, **characterised in that** in the wall of the recesses (4,4a,4b) there is provided a respective annular shoulder (9,9a,9b) which is brought about by a variation in cross-section and against which the connecting members (10) can be clamped in a fluidtight manner.

10. A duct pipe according to Claims 3 to 9, **characterised in that** a tubular locking member (46) is inserted into the recess (4,4a) as a seepage seal (45), which locking member is securely connected to an angular ring (47) which annularly surrounds the locking member and which is bonded into the pipe wall.

11. A duct pipe according to Claim 10, **characterised in that** a transition member (48) is inserted into the locking member (46) for diametric reduction.

12. A duct pipe according to Claim 11, **characterised in that** the transition member (48) comprises a lower cylindrical shoulder (49) which can be inserted into the locking member (46) and which merges via an annular part (50), which projects inwards in the manner of a flange, into an upper cylindrical shoulder (51) receiving the pipe of a building connection line.

13. A duct pipe according to any one of Claims 10 to 12, **characterised in that** both the locking member (46) and the transition member (48) consist of plastics material, for example PVC.

14. A duct pipe according to any one of Claims 3 to 8, **characterised in that** as a seepage seal (45) there is inserted into the recess (4c) an annular member (55,56) which is of U-shaped cross-section and of which the web (61,62) directed towards the recess (4c) forms of a guide for a connector element (37).

15. A duct pipe according to Claim 14, **characterised in that** the web (62) forms an annular groove (63) directed towards the recess (4c) and intended to accommodate a sealing ring.

16. A method of producing a duct pipe according to any of Claims 1 to 15, **characterised by** the following method steps:
- during the production of the duct pipe (1) in a casting mould, recesses (4,4a,4b) passing through the pipe wall (3) are created in the pipe wall (3) by inserting shaped members into the casting mould, which form hollow spaces suitable for receiving connecting members,
- after the demoulding of the hardened pipe, the recesses (4,4a,4b,4c) are closed flush both with respect to the outside (5) and the inside (7) of the pipe by closure means (26,28,32), and in such a way
- that, in the event of the subsequent connection of an inlet line to a pipe of a duct installed in the ground, they can be opened from the outside for the purpose of fitting the parts required for the connection.

17. A method according to Claim 16, **characterised in that**, after the demoulding of the hardened pipe, the connecting members (10) required for the subsequent connection of inlet lines are inserted in the recesses and, after the fitting of the connecting members, the recesses (4) are closed flush both with respect to the outside (5) and the inside (7) of the pipe by closure means (26,28,32).

18. A method of producing a duct pipe according to any of Claims 1 to 15, with a continuous inner lining (2) of a chemical-resistant material, in particular an internal liner of plastics material, **characterised by** the following method steps:
- during the production of the duct pipe in a casting mould, in the case of a continuous internal liner, recesses (4) are formed in and passing through the pipe wall,
- after the demoulding of the hardened pipe, the recesses (4) are closed flush with respect to the outside (5) of the pipe by closure means (32), and in such a way
- that, in the event of the subsequent connection of an inlet line to a pipe of a duct installed in the ground, they can be opened from the outside (5) for the purpose of fitting the parts required for the connection.

19. A method according to Claim 18, **characterised in that** to open the recess after the removal of the closure means from the outside the internal liner (2) inwardly sealing the recess (4) is drilled through.

## Revendications

1. Tuyau de canalisation, en particulier tuyau d'avancement pour l'avancement dans une construction sans fossé, comprenant un corps de tuyau à base d'un mélange apte à prendre ou même à base de granulats principalement minéraux et d'un liant durcissant,
- des conduites d'arrivée pouvant être raccordées ultérieurement latéralement sur le côté à une canalisation construite à partir de tels tuyaux,
- des évidements (4, 4a, 4b) traversant la paroi de tuyau (3) avec une section de préférence circulaire étant prévus dans le corps de tuyau (1, 11a, 11b) en des endroits prédéfinis,
- les évidements (4, 4a, 4b) étant fermés aussi bien en direction du côté extérieur (5) que du côté intérieur (7) du tuyau par des moyens de fermeture, et ce de telle sorte que
- ils peuvent être ouverts à partir du côté extérieur dans le cas du raccordement d'une conduite d'arrivée à un tuyau, posé dans la terre, d'une canalisation,
**caractérisé en ce que** les évidements (4, 4a, 4b) forment sur l'épaisseur de la paroi de tuyau (3) une cavité appropriée pour le logement de parties de raccordement et **en ce que** les moyens de fermeture sont adaptés à la surface extérieure (5) du tuyau (1).

2. Tuyau de canalisation selon la revendication 1, **caractérisé en ce que** les parties de raccordement nécessaires pour le raccordement ultérieur de conduites d'arrivée sont déjà insérées dans les évidements (4, 4a, 4b) avant le placement des moyens de fermeture.

3. Tuyau de canalisation selon la revendication 1 ou 2, **caractérisé en ce que** les parties de raccordement comprennent des éléments s'engageant dans la paroi de tuyau (3) et formant un joint périphérique.

4. Tuyau de canalisation selon l'une quelconque des revendications 1 à 3, **caractérisé en ce que** des plaques de recouvrement (32) principalement en acier sont prévues comme moyen de fermeture en direction du côté extérieur du tuyau.

5. Tuyau de canalisation selon la revendication 4, **caractérisé en ce que** les plaques de recouvrement (32) sont adaptées à la courbure de la surface extérieure (5) du tuyau (1) et sont agencées au même niveau que celui-ci.

6. Tuyau de canalisation selon la revendication 4 ou 5, **caractérisé en ce que** les plaques de recouvrement (32) sont plus grandes en périmètre que la section des évidements (4, 4a, 4b) et sont insérées chacune dans une cavité entourant l'évidement dans la surface extérieure (5) du corps de tuyau (1).

7. Tuyau de canalisation selon la revendication 6, **caractérisé en ce que** les plaques de recouvrement (32) sont fixées dans les zones périphériques dépassant de la section des évidements sur le corps de tuyau (1) de façon amovible, par exemple par des vis (34).

8. Tuyau de canalisation selon l'une quelconque des revendications 4 à 7, **caractérisé en ce que** les joints entre les plaques de recouvrement et le corps de tuyau sont rendus étanches par respectivement au moins un joint (35) périphérique.

9. Tuyau de canalisation selon l'une quelconque des revendications 1 à 8, **caractérisé en ce que** dans la paroi de chacun des évidements (4, 4a, 4b) est prévu un épaulement annulaire (9, 9a, 9b) provoqué par une variation de section, contre lequel les parties de raccordement peuvent être tendues de façon étanche.

10. Tuyau de canalisation selon l'une quelconque des revendications 3 à 9, **caractérisé en ce qu'**une partie de blocage (46) tubulaire, qui est reliée de façon fixe à une bague d'angle (47) entourant cette partie à la façon d'un anneau et intégrée dans la paroi du tuyau, est insérée comme joint périphérique (45) dans l'évidement (4, 4a).

11. Tuyau de canalisation selon la revendication 10, **caractérisé en ce qu'**une partie de transition (48) est placée dans la partie de blocage (46) pour la reprise du diamètre.

12. Tuyau de canalisation selon la revendication 11, **caractérisé en ce que** la partie de transition (48) comprend une embase (49) cylindrique, inférieure, pouvant être insérée dans la partie de blocage (46), qui fait place au moyen d'une partie annulaire (50) dépassant à la façon d'une bride vers l'intérieur dans une embase (51) cylindrique supérieure, recevant le tuyau d'un raccordement d'immeuble.

13. Tuyau de canalisation selon l'une quelconque des revendications 10 à 12, **caractérisé en ce que** aussi bien la partie de blocage (46) que la partie de transition (48) sont en matière plastique, par exemple en PVC.

14. Tuyau de canalisation selon l'une quelconque des revendications 3 à 8, **caractérisé en ce que**, comme joint périphérique, une partie annulaire (55, 56) avec une section en U est insérée dans l'évidement (4c), laquelle partie est enfoncée avec au moins une branche (57, 59) dans le corps de tuyau (1) et dont la nervure (61, 62) dirigée vers l'évidement (4c) forme un guide pour un élément de raccordement (37).

15. Tuyau de canalisation selon la revendication 14, **caractérisé en ce que** la nervure (62) forme une rainure annulaire (63) dirigée en direction de l'évidement (4c) pour le logement d'une bague de joint.

16. Procédé pour fabriquer un tuyau de canalisation selon l'une quelconque des revendications 1 à 15, **caractérisé par** les étapes de procédé suivantes :
- lors de la fabrication du tuyau de canalisation (1) dans une forme de coffrage, des évidements (4, 4a, 4b) traversant la paroi de tuyau (3), qui forment des cavités appropriées pour le logement de parties de raccordement, sont générés dans la paroi de tuyau (3) par l'insertion de corps moulés dans la forme de coffrage,
- après le décoffrage du tuyau durci, les évidements (4, 4a, 4b, 4c) sont fermés au même niveau aussi bien en direction du côté extérieur que du côté intérieur du tuyau par des moyens de fermeture, et ce de telle sorte que
- ils peuvent être ouverts dans le cas du raccordement ultérieur d'une conduite d'arrivée à un tuyau, posé dans la terre, d'une canalisation à partir du côté extérieur pour le montage des parties nécessaires pour le raccordement.

17. Procédé selon la revendication 16, **caractérisé en ce que**, après le décoffrage du tuyau durci, les parties de raccordement nécessaires pour le raccordement ultérieur des conduites d'arrivée sont montées dans les évidements et après le montage des parties de raccordement, les évidements sont fermés au même niveau, aussi bien en direction du côté extérieur qu'en direction du côté intérieur du tuyau, par des moyens de fermeture.

18. Procédé pour fabriquer un tuyau de canalisation selon l'une quelconque des revendications 1 à 15, comprenant un revêtement intérieur continu à base d'un matériau résistant aux produits chimiques, en particulier un inliner en plastique, **caractérisé par** les étapes de procédé suivantes :
- lors de la fabrication du tuyau de canalisation dans une forme de coffrage, ces évidements de traversée sont générés avec un inliner continu dans la paroi du tuyau,
- après le décoffrage du tuyau durci, les évidements sont fermés au même niveau en direction du côté extérieur du tuyau par des moyens de fermeture, et ce de telle sorte que
- dans le cas du raccordement ultérieur d'une conduite d'arrivée à un tuyau, posé dans la terre, d'une canalisation, ils peuvent être ouverts à partir du côté extérieur pour le montage des parties nécessaires pour le raccordement.

19. Procédé selon la revendication 18, **caractérisé en ce que**, pour l'ouverture de l'évidement après l'enlèvement des moyens de fermeture par l'extérieur, l'inliner fermant l'évidement vers l'intérieur est transpercé.
